# FASCICULE DE BREVET EUROPEEN

(11) **EP 0 919 845 B1**
(45) Date de publication et mention de la délivrance du brevet: **31.03.2004**
(21) Numéro de dépôt: 98402952.0
(22) Date de dépôt: 26.11.1998
(51) Int. Cl.: G02B 23/26

(54) **Système d'inspection de zones internes d'une machine par endoscopie par fibres optiques**
Untersuchungssystem der inneren Zonen einer Maschine durch Faseroptische Endoscopie
Inspection system of internal zones of a machine by optical fiber endoscopy

(30) Priorité: 27.11.1997 FR 9714897
(43) Date de publication de la demande: 02.06.1999
(73) Titulaire: Snecma Moteurs, 75015 Paris (FR)
(72) Inventeur: Naudet, Jacky, 91070 Bondoufle (FR)

(56) Documents cités:
- DE-A- 19 631 970
- US-A- 3 841 764
- US-A- 4 640 124
- "BORESCOPE WITH LARGE DEPTH OF FOCUS" NTIS TECH NOTES,1 novembre 1990, page 993 XP000298081
- HUPPMANN H, LÖBERT P: "MÖGLICHKEITEN UND GRENZEN DER ENDOSCOPIE BEI GROSSREVISIONEN" VGB KRAFTWERKSTECHNIK, vol. 57, no. 9, septembre 1977, pages 580-589, XP002071559

## Description

L'invention concerne un système d'inspection d'une machine par endoscopie par fibres optiques. Elle s'applique aux machines qui comportent des zones inaccessibles à contrôler et en particulier aux turbomachines qui équipent les moteurs d'avion.

Pour procéder à l'inspection interne de zones critiques dans une machine, et en particulier dans un moteur d'avion, il est connu d'utiliser un endoscope ; le brevet FR 2 443 697 en montre un exemple. L'endoscope est introduit dans des ouvertures d'entrée locales aménagées dans des parois et/ou des cloisons de la machine pour l'inspection de zones locales situées à proximité des ouvertures d'entrée.

Le document US-A-4 640 124 divulgue un endoscope simple pour turbines d'avions.

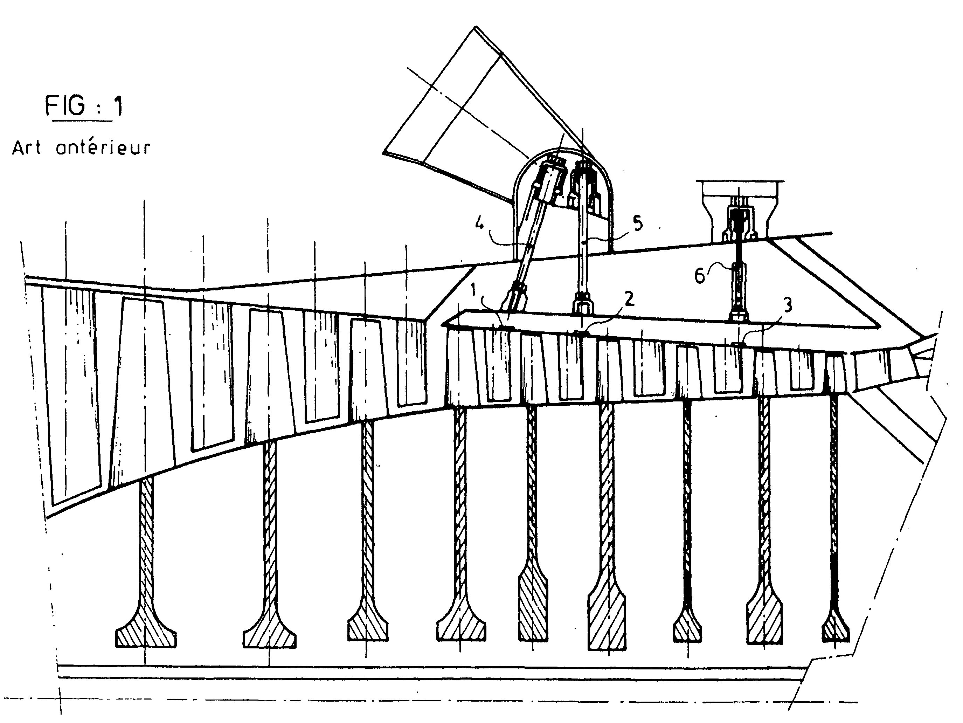

La figure 1 représente une vue en coupe schématique d'un exemple de compresseur de turbomachine comportant trois ouvertures d'entrée prolongées par des traversées de cloison rigides pour l'endoscopie de trois zones critiques différentes, selon l'art antérieur. Les trois zones critiques 1, 2, 3 à inspecter sont des étages de disques aubagés situés à l'aval du compresseur. Les ouvertures d'entrée et les traversées de cloison rigides 4, 5, 6 permettent l'introduction et la mise en place d'un endoscope. Chaque traversée de cloison permet l'inspection par endoscopie d'un seul étage de compresseur. Les zones pouvant être inspectées sont limitées car l'examen par endoscopie d'une zone critique n'est possible que lorsqu'une ouverture peut être aménagée à proximité de cette zone critique. En outre, plusieurs ouvertures d'entrée et traversées de cloison doivent être aménagées dans la paroi de la machine pour permettre l'inspection de différentes zones internes éloignées les unes des autres.

Le but de l'invention est de résoudre ces problèmes et de réaliser un système d'inspection d'une machine par endoscopie par fibres optiques permettant l'examen de différentes zones internes difficilement accessibles et éloignées les unes des autres, à partir d'une seule ouverture d'entrée aménagée dans une paroi de la machine.

Pour cela, l'invention concerne un système d'inspection par endoscopie comportant essentiellement un dispositif d'observation équipé d'un endoscope et un réseau de distribution et de guidage implanté dans la machine. Le réseau de distribution et de guidage définit plusieurs voies d'inspection différentes dans la machine depuis une ouverture aménagée dans une paroi de la machine jusqu'à différentes zones critiques internes prédéterminées, chaque voie d'inspection étant équipée de moyens de guidage de l'endoscope jusqu'à une zone interne à contrôler.

Le réseau de distribution et de guidage comporte avantageusement des premiers moyens électriques internes implantés dans chaque voie d'inspection et coopérant avec des seconds moyens électriques solidaires d'un endoscope pour détecter la position de l'endoscope dans le réseau de distribution et de guidage et transmettre cette position à un dispositif de surveillance externe à la machine. La détection de la position de l'endoscope dans le réseau de distribution et de guidage permet de surveiller la progression de l'endoscope et d'aider à son pilotage dans le réseau de distribution et de guidage.

Le système d'inspection par endoscopie est avantageusement équipé de moyens de ventilation destinés à refroidir l'endoscope et/ou le réseau de distribution et de guidage avant et/ou pendant l'introduction de l'endoscope dans le cas où la machine à inspecter n'est pas complètement refroidie.

Selon l'invention, le système d'inspection de zones internes d'une machine comportant un dispositif d'observation équipé d'un endoscope à fibres optiques destiné à être introduit par une ouverture d'entrée aménagée dans une paroi de la machine et d'une source de lumière reliée à l'endoscope, est caractérisé en ce qu'il comporte en outre un réseau de distribution et de guidage de l'endoscope à l'intérieur de la machine comportant:
- un barillet destiné à être monté dans l'ouverture d'entrée aménagée dans la paroi de la machine, le barillet comportant au moins un orifice axial ayant un diamètre adapté au passage de l'endoscope,
- un réseau de gaines souples de guidage fixé à l'intérieur de la machine entre l'orifice axial du barillet et des zones internes prédéterminées à contrôler, chaque gaine souple de guidage définissant une voie d'inspection particulière.

D'autres particularités et avantages de l'invention apparaitront clairement dans la suite de la description donnée à titre d'exemple non limitatif et faite en liaison avec les figures annexées qui représentent :
- la figure 1, une vue en coupe schématique d'un exemple de compresseur de turbomachine comportant trois ouvertures prolongées par des traversées de cloison rigides pour l'endoscopie de trois zones internes différentes, selon l'art antérieur ;
- la figure 2, un schéma d'un exemple d'endoscope relié à un ensemble vidéoscopique, selon l'invention ;
- la figure 3, une vue en coupe schématique d'un exemple de compresseur de turbomachine équipé d'un réseau de distribution et de guidage, selon l'invention ;
- la figure 4, une vue schématique en perspective d'un exemple de barillet, selon l'invention ;
- les figures 5a, 5b, deux vues schématiques en perspective, respectivement en coupe longitudinale, d'un exemple d'aiguillage, selon l'invention ;
- la figure 6, une vue schématique d'un exemple de clapet anti-retour, selon l'invention ;
- la figure 7, un exemple schématique d'un système électrique de détection de la position d'un endoscope dans un réseau de distribution et de guidage, selon l'invention ;
- la figure 8, une vue schématique détaillée et en coupe d'un exemple de coopération entre un premier contact électrique localisé au niveau d'un aiguillage du réseau de distribution et de guidage et un second contact électrique localisé sur la tête d'un endoscope, selon l'invention.

Le système d'inspection de zones internes d'une machine par endoscopie comporte essentiellement un dispositif d'observation équipé d'un endoscope relié à une source de lumière pour visualiser des zones critiques internes de la machine et au moins un réseau de distribution et de guidage de l'endoscope fixé à l'intérieur de la machine à inspecter et destiné à guider l'endoscope depuis une ouverture aménagée dans une paroi de la machine jusqu'à différentes zones critiques internes prédéterminées.

Avantageusement, le système d'inspection par endoscopie comporte en outre un système électrique de détection de la position instantanée de l'endoscope dans le réseau de distribution et de guidage permettant de surveiller la progression de l'endoscope dans le réseau de distribution et de guidage et d'aider au pilotage de l'endoscope.

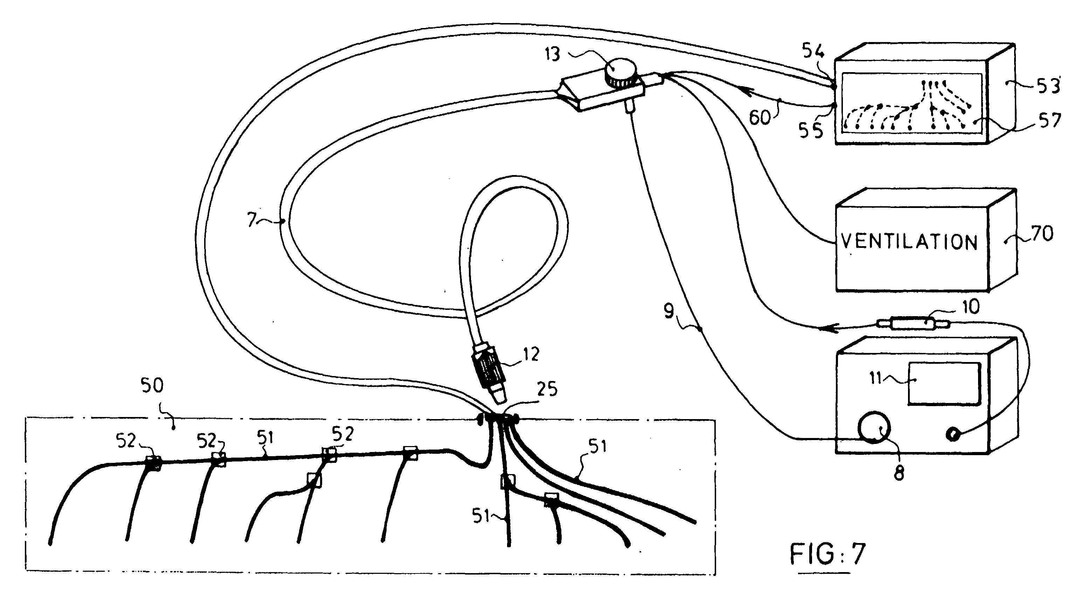

Enfin, le système d'inspection par endoscopie peut comporter des moyens de ventilation destinés à refroidir l'endoscope et/ou le réseau de distribution et de guidage de l'endoscope pour permettre l'introduction de l'endoscope à l'intérieur de parties chaudes de la machine avant leur refroidissement complet. Les moyens de ventilation peuvent par exemple être raccordés directement à l'entrée du réseau de distribution et de guidage par l'ouverture aménagée dans la paroi de la machine prévue pour l'introduction de l'endoscope. Les moyens de ventilation peuvent également être raccordés sur un conduit de ventilation spécifique introduit par exemple dans une gaine de protection de l'endoscope tel que représenté sur la figure 7.

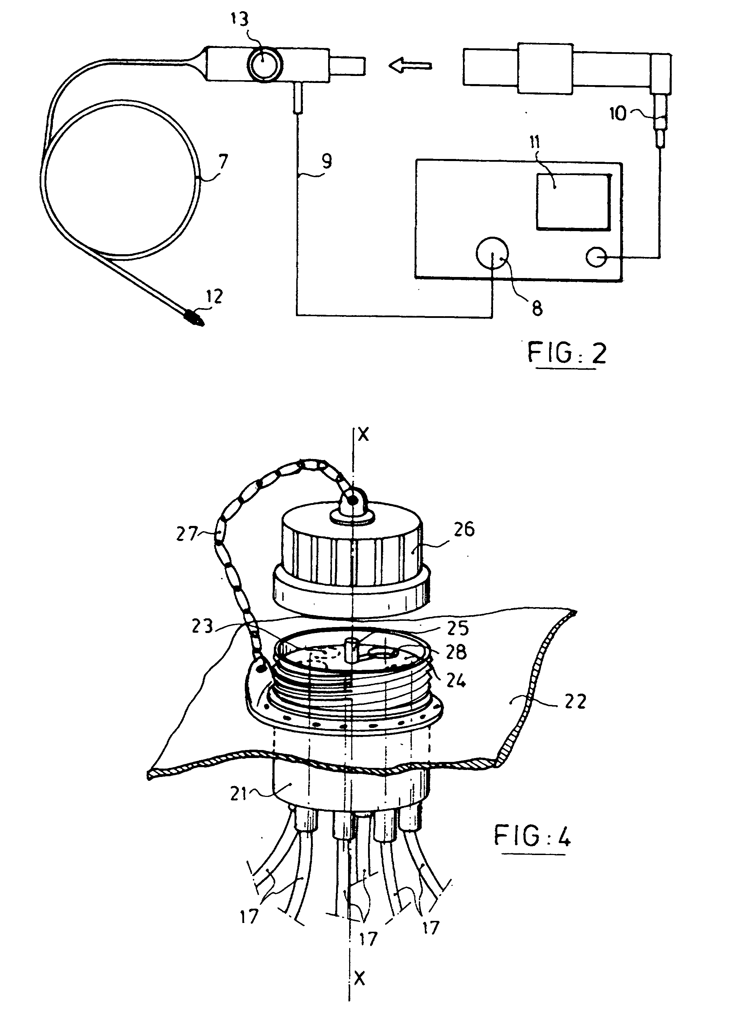

La figure 2 représente un schéma d'un exemple d'endoscope relié à un ensemble vidéoscopique, selon l'invention. L'endoscope 7 comporte de manière connue un fibroscope constitué de faisceaux de fibres optiques recouverts d'une gaine souple protectrice. Une source de lumière 8 est connectée à l'endoscope par un câble de lumière 9. L'endoscope 7 peut être utilisé en vision directe, ou avec un appareil photo, ou avec une caméra vidéo 10. Préférentiellement, l'endoscope est relié à un ensemble vidéoscopique comportant une caméra vidéo 10 et un moniteur de contrôle 11. Les images issues de l'endoscope et acquises par la caméra sont alors visualisées en temps réel sur le moniteur de contrôle 11.

Avantageusement l'endoscope 7 comporte une extrémité d'observation fixée dans une tête d'endoscope 12 orientable, l'orientation de la tête d'endoscope étant commandée à distance, par exemple au moyen d'un bouton de commande 13 manoeuvrable manuellement.

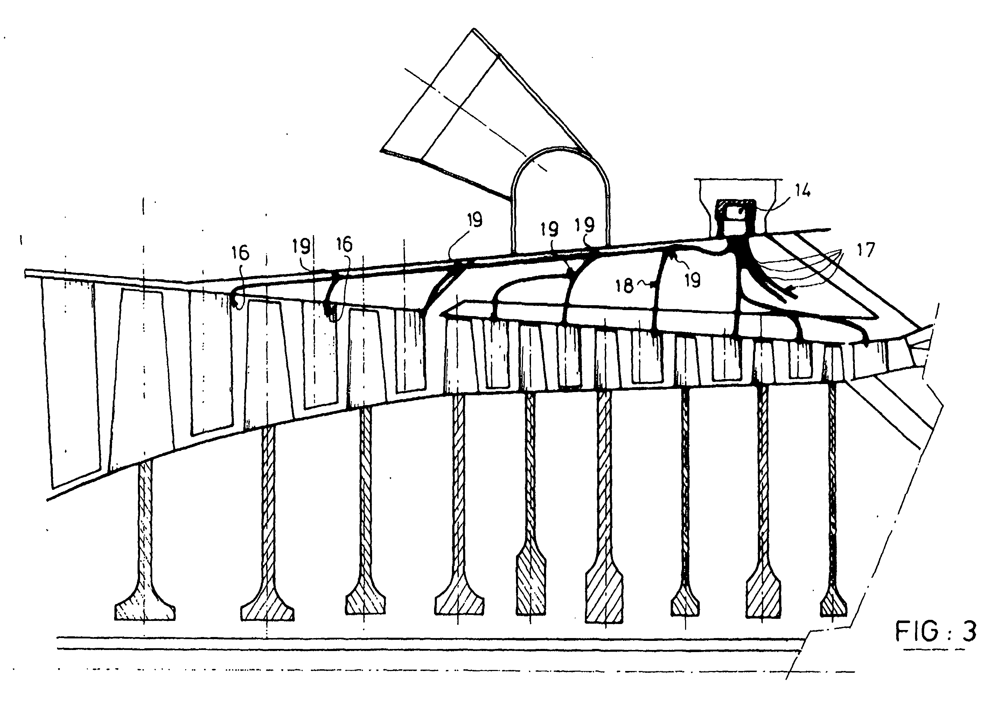

La figure 3 représente une vue en coupe d'un exemple de compresseur de turbomachine équipé d'un réseau de distribution et de guidage, selon l'invention.

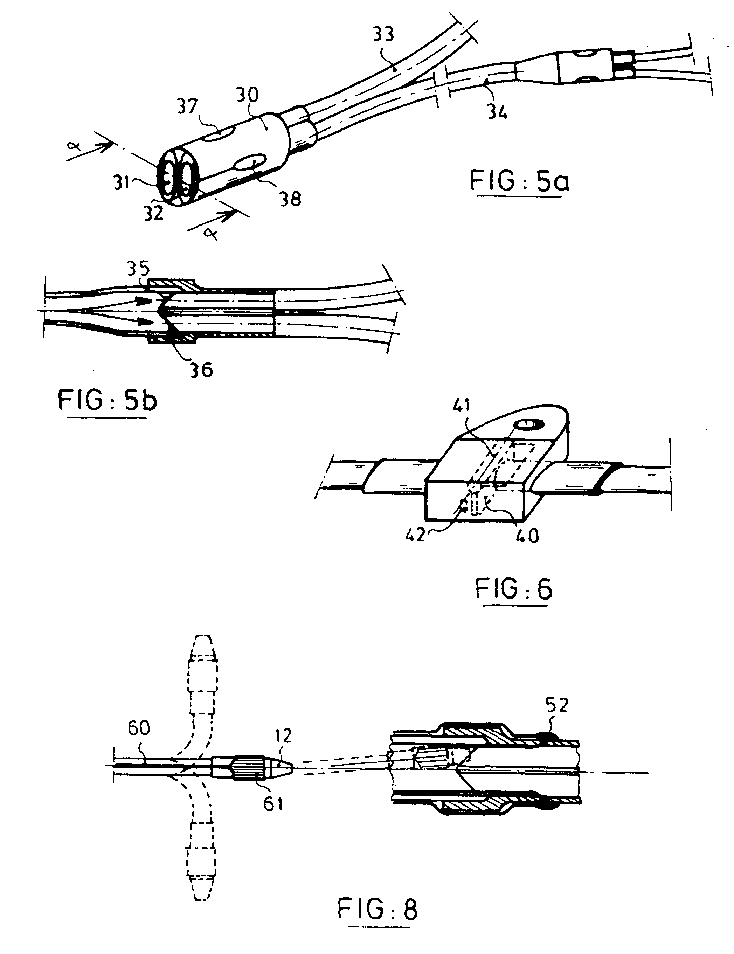

Le réseau de distribution et de guidage comporte un barillet 14, décrit de façon détaillée en liaison avec la figure 4, inséré dans une ouverture d'entrée aménagée dans une paroi du compresseur et un réseau 15 de gaines souples de guidage montées à l'intérieur du compresseur entre le barillet 14 et des zones internes critiques 16 prédéterminées à contrôler. Les gaines souples peuvent être réalisées dans différents types de matériau, par exemple en plastique ou en métal ; cependant, pour l'examen de parties chaudes d'une machine, comme le compresseur d'un moteur, les gaines souples sont de préférence métalliques.

Les gaines souples définissent plusieurs voies d'inspection possibles à l'intérieur du compresseur de la turbomachine, chaque gaine souple permettant de guider un endoscope depuis le barillet jusqu'à une zone critique prédéterminée à contrôler. Le réseau de distribution et de guidage comporte des premières gaines souples de guidage 17 directement reliées au barillet et peut également comporter, comme représenté sur la figure 3, des gaines souples de guidage additionnelles 18 montées en dérivation et/ou en arborescence sur les premières gaines souples, les gaines souples additionnelles débouchant sur des zones internes additionnelles à contrôler. Le réseau de distribution et de guidage peut ainsi être très étendu à l'intérieur d'une machine à inspecter et permet le contrôle d'un grand nombre de zones critiques éloignées les unes des autres à partir d'une seule ouverture d'entrée aménagée dans une paroi de la machine.

Des aiguillages 19, représentés sur les figures 5a et 5b, sont montés au niveau de chaque jonction entre une première gaine souple de guidage montée directement sur le barillet 14 et une gaine souple additionnelle montée en dérivation ou en arborescence sur la première gaine souple. Les aiguillages 19 permettent de diriger un endoscope vers l'une ou l'autre des voies d'inspection situées en aval de la jonction entre les deux gaines souples de guidage.

Enfin, dans le cas où le réseau de distribution et de guidage est fixé dans des parties chaudes d'une machine, par exemple dans un compresseur d'une machine, il est préférable que, lors du fonctionnement de la machine, les gaz chauds ne puissent pas pénétrer dans les gaines souples de guidage afin de ne pas les endommager. Pour cela, des clapets anti-retour, dont un exemple est représenté sur la figure 6, sont avantageusement mis en place sur chaque gaine souple, à leur extrémité aval qui débouche au niveau des zones critiques à contrôler. Le clapet anti-retour peut être du type clapet à bascule, mais d'autres technologies sont également envisageables sans sortir du cadre de l'invention.

La figure 4 représente une vue schématique en perspective d'un exemple de barillet, selon l'invention.

Le barillet comporte un corps 21 de forme cylindrique, d'axe longitudinal XX', inséré dans une ouverture aménagée dans une paroi de la machine à inspecter et fixé à ladite paroi qui lui sert de support 22. A l'intérieur du corps du barillet sont logés une partie de barillet comportant plusieurs orifices axiaux 23 de diamètre adapté au passage d'un endoscope et un obturateur tournant 24 permettant de découvrir un seul des orifices axiaux 23 à la fois et de recouvrir les autres orifices axiaux afin de sélectionner une voie d'inspection prédéterminée.

Les orifices axiaux 23 sont raccordés individuellement à des gaines souples de guidage 17 de l'endoscope montées à l'intérieur de la machine. Le nombre de gaines souples de guidage raccordées au barillet est égal au nombre d'orifices axiaux du barillet.

Le barillet comporte avantageusement une borne de connexion électrique 25, disposée par exemple en son centre, permettant le raccordement d'un système électrique de détection de la position d'un endoscope introduit dans le réseau de distribution et de guidage.

L'obturateur tournant 24 est disposé devant les orifices axiaux 23 et comporte un seul trou 28 de diamètre adapté au passage d'un endoscope.

Le trou de l'obturateur peut être mis en correspondance avec un orifice axial 23 choisi comme représenté sur la figure 4 afin de sélectionner une voie d'inspection prédéterminée et d'obturer toutes les autres voies d'inspection.

Avantageusement, l'obturateur tournant 24 peut être équipé de moyens de rappel, non représentés, tel qu'un ressort par exemple, permettant à la fin de toutes les opérations d'inspection des parties internes de la machine, de placer automatiquement l'obturateur dans une position prédéterminée de sécurité selon laquelle tous les orifices axiaux du barillet sont obturés. L'obturation de tous les orifices axiaux d'accès au réseau de distribution et de guidage installé à l'intérieur de la machine permet d'éviter que d'éventuelles fuites ne se produisent lorsque la machine est en fonctionnement.

L'orifice axial 23 du barillet découvert par l'obturateur 24 est destiné à l'introduction d'un endoscope dans le réseau de distribution et de guidage.Il peut également être utilisé pour le raccordement d'un dispositif de ventilation externe à la machine, par exemple pour l'injection d'air froid, permettant le refroidissement du réseau de distribution et de guidage préalablement à l'examen par endoscopie. Cette possibilité de ventilation des gaines souples du réseau avant l'introduction d'un endoscope présente l'avantage de permettre un examen des parties chaudes d'une machine, sans risque de détérioration de l'endoscope, alors que la machine n'est pas complètement refroidie.

En outre, le barillet est muni d'un bouchon de fermeture 26 du barillet relié, par exemple au moyen d'une chaine 27, au corps de barillet 21. Le bouchon 26 peut être équipé d'un dispositif d'alarme, non représenté, par exemple de type alarme visuelle telle qu'une lampe, pour éviter l'oubli du remontage du bouchon de fermeture du barillet à la fin des opérations d'inspection des zones internes de la machine.

Les figures 5a et 5b représentent deux vues schématiques en perspective, respectivement en coupe longitudinale, d'un exemple d'aiguillage, selon l'invention.

L'aiguillage comporte un corps cylindrique 30 ouvert en ses deux extrémités d'entrée et de sortie, dans lequel sont aménagés deux conduits longitudinaux 31, 32. Dans chaque conduit longitudinal est insérée une gaine souple de guidage 33, 34. A l'extrémité d'entrée de l'aiguillage, chaque conduit longitudinal est coupé en biseau 35, 36 comme représenté sur la figure 5b. Le biseau est orienté de manière à faciliter l'orientation et l'introduction d'un endoscope dans le conduit longitudinal correspondant à la voie de détection présélectionnée. Dans chaque conduit longitudinal de l'aiguillage est monté un contact électrique 37, 38 appartenant à un système électrique de détection décrit en liaison avec la figure 7.

La figure 6 représente une vue schématique d'un exemple de clapet anti-retour, selon l'invention. Le clapet anti-retour représenté est un clapet à bascule comportant une porte basculante 40 autour d'un axe 41 perpendiculaire à l'axe longitudinal de la gaine souple. En position fermée, la porte basculante 40 est bloquée sur une butée fixe 42 et obture complètement la gaine souple sur laquelle est monté le clapet anti-retour. Lorsque la machine, ou le moteur, est en fonctionnement, la pression des gaz à l'intérieur de la machine ou du moteur maintient la porte basculante en position fermée, ce qui empêche le passage des gaz chauds à l'intérieur du réseau de distribution et de guidage.

Lorsque la machine, ou le moteur, est arrêtée le passage d'un endoscope fait pression sur la porte qui s'ouvre pour permettre l'inspection d'une zone critique disposée en regard de l'extrémité débouchante de la gaine souple considérée.

Avantageusement, le système d'inspection par endoscopie comporte un système électrique de détection de la position instantanée d'un endoscope introduit dans le réseau de distribution et de guidage permettant de surveiller la progression d'un endoscope dans le réseau de distribution et de guidage et d'aider au pilotage de l'endoscope.

Un exemple de système électrique de détection de la position de l'endoscope est représenté schématiquement sur la figure 7. Un dispositif de ventilation 70 raccordé à un conduit de ventilation interne à l'endoscope est également représenté sur la figure 7. Le système électrique de détection de position comporte des premiers moyens électriques internes 50 solidaires du réseau de distribution et de guidage, des seconds moyens électriques solidaires de l'endoscope, et un dispositif électrique 53 de surveillance de la position de l'endoscope dans le réseau de distribution et de guidage. Le dispositif électrique 53 de surveillance comporte une première et une deuxième bornes d'entrée 54, 55 sur lesquelles sont respectivement reliés les premiers et seconds moyens électriques.

Les premiers moyens électriques internes 50 solidaires du réseau de distribution et de guidage comportent un ensemble de lignes électriques 51 fixées le long de la paroi interne de chaque gaine souple de guidage, par exemple sous forme de circuits imprimés souples et des premiers contacts électriques 52 aménagés sur les lignes électriques en des positions prédéterminées situées au moins au niveau de chaque aiguillage comme représenté sur la figure 8. Au niveau des aiguillages, chaque gaine souple de guidage insérée dans les conduits longitudinaux de l'aiguillage est équipée d'un premier contact électrique monté sur une ligne électrique cheminant le long de la gaine souple de guidage correspondante. Les lignes électriques sont toutes reliées à une borne de connexion électrique multivoies 25 fixée au barillet, par exemple au centre du barillet.

La borne de connexion électrique 25 est reliée à la première borne d'entrée 54 du dispositif électrique 53 de surveillance. Cette première borne d'entrée est également multivoies. Les seconds moyens électriques comportent une ligne électrique 60 fixée le long de l'endoscope, par exemple sous forme de circuit imprimé, et reliée par une première extrémité à un second contact électrique 61 fixé dans une région périphérique externe de la tête de l'endoscope 12, comme représenté sur la figure 8.

La ligne électrique 60 solidaire de l'endoscope est reliée par une seconde extrémité à la seconde borne d'entrée 55 du dispositif électrique de surveillance 53.

Le dispositif électrique de surveillance 53 comporte des témoins lumineux 56, par exemple des diodes éléctroluminescentes connectés entre les deux bornes d'entrée du dispositif électrique de surveillance par l'intermédiaire de circuits électriques, non représentés, montés dans le dispositif électrique de surveillance. Chaque témoin lumineux est associé à l'un des premiers contacts électriques 52 placés dans le réseau de distribution et de guidage, le nombre de témoins lumineux étant au moins égal au nombre de premiers contacts électriques.

Les témoins lumineux sont disposés sur un panneau de visualisation 57 comportant une représentation graphique reproduisant le réseau de distribution et de guidage. L'emplacement des témoins lumineux sur la représentation graphique recopie à l'identique l'emplacement correspondant des premiers contacts électriques 52 placés dans le réseau de distribution et de guidage.

Le fonctionnement du système électrique de détection de la position d'un endoscope introduit dans le réseau de distribution et de guidage est le suivant.

Pendant le cheminement de l'endoscope dans les gaines souples du réseau de distribution et de guidage, et à chaque fois que le second contact électrique 61 fixé sur la tête de l'endoscope 12 vient s'appuyer sur l'un des premiers contacts électriques 52 du réseau de distribution et de guidage, il y a établissement d'une liaison électrique entre une ligne électrique solidaire du réseau de distribution et de guidage et la ligne électrique solidaire de l'endoscope, et fermeture d'un circuit électrique de détection correspondant, le circuit électrique de détection reliant le premier contact électrique considéré au témoin lumineux qui lui est associé sur la représentation graphique. La fermeture de ce circuit électrique de détection provoque l'éclairage du témoin lumineux, ce qui permet de repérer la position instantanée de la tête de l'endoscope dans le réseau de distribution et de guidage.

Lorsque l'endoscope est positionné au niveau d'un aiguillage, l'éclairage du témoin lumineux permet de vérifier et éventuellement de corriger l'orientation de l'endoscope si l'endoscope est engagé dans une voie d'inspection ne correspondant pas à la voie choisie.

## Revendications

1. Système d'inspection de zones internes d'une machine comportant un dispositif d'observation équipé d'un endoscope à fibres optiques destiné à être introduit par une ouverture d'entrée aménagée dans une paroi de la machine et d'une source de lumière reliée à l'endoscope, **caractérisé en ce qu'**il comporte en outre un réseau de distribution et de guidage de l'endoscope destiné à être monté à l'intérieur de la machine comportant:
- un barillet (14) destiné à être monté dans l'ouverture d'entrée aménagée dans la paroi de la machine, le barillet comportant au moins un orifice axial (23) ayant un diamètre adapté au passage de l'endoscope,
- un réseau (15) de gaines souples de guidage destiné à être fixé à l'intérieur de la machine entre l'orifice axial (23) du barillet et des zones internes (16) prédéterminées à contrôler, chaque gaine souple de guidage définissant une voie d'inspection particulière.

2. Système d'inspection de zones internes d'une machine selon la revendication 1, **caractérisé en ce que** le réseau (15) de gaines souples de guidage comporte au moins une première gaine souple de guidage (17) raccordée directement à l'orifice axial (23) du barillet et apte à déboucher au niveau d'une zone interne (16) prédéterminée à contrôler.

3. Système d'inspection de zones internes d'une machine selon la revendication 2, **caractérisé en ce que** le réseau de gaine souples de guidage comporte au moins une gaine souple de guidage additionnelle (18) montée en dérivation sur la première gaine souple de guidage (17) et apte à déboucher sur une zone interne additionnelle à contrôler.

4. Système d'inspection de zones internes d'une machine selon la revendication 2, **caractérisé en ce que** le réseau (15) de gaines souples de guidage comporte plusieurs gaines souples de guidage additionnelles (18) montées en dérivation et/ou en arborescence sur la première gaine souple de guidage (17).

5. Système d'inspection de zones internes d'une machine selon l'une quelconque des revendications 3 ou 4, **caractérisé en ce que** le réseau de gaines souples de guidage (15) comporte des aiguillages (19) montés au niveau de chaque dérivation.

6. Système d'inspection de zones internes d'une machine selon l'une quelconque des revendications précédentes, **caractérisé en ce que** des clapets anti-retour sont montés sur chaque gaine souple de guidage en une extrémité débouchant au niveau des zones internes à contrôler.

7. Système d'inspection de zones internes d'une machine selon la revendication 1, **caractérisé en ce que** le barillet (14) comporte plusieurs orifices axiaux (23) reliés individuellement à des gaines souples de guidage destinées à être fixées à l'intérieur de la machine pour définir plusieurs voies d'inspection possibles.

8. Système d'inspection de zones internes d'une machine selon la revendication 7, **caractérisé en ce que** le barillet (14) comporte en outre un obturateur tournant (24) placé devant les orifices axiaux (23), l'obturateur tournant (24) comportant un seul trou (28) de diamètre adapté au passage de l'endoscope, le trou (28) de l'obturateur pouvant être mis en correspondance avec l'un quelconque des orifices axiaux (23) pour sélectionner une voie d'inspection prédéterminée et obturer toutes les autres voies d'inspection.

9. Système d'inspection de zones internes d'une machine selon la revendication 1, **caractérisé en ce que** l'endoscope comporte une extrémité d'observation fixée dans une tête d'endoscope (12) orientable, l'orientation de la tête d'endoscope étant commandée à distance.

10. Système d'inspection de zones internes d'une machine selon l'une quelconque des revendications précédentes, **caractérisé en ce qu'**il comporte en outre un système électrique de détection de la position instantanée d'un endoscope introduit dans le réseau de distribution et de guidage, le système électrique de détection comportant :
- des premiers moyens électriques internes (50) solidaires du réseau de distribution et de guidage,
- des seconds moyens électriques solidaires de l'endoscope,
- un dispositif électrique (53) de surveillance de la position de l'endoscope comportant une première et une deuxième bornes d'entrée (54,55) auxquelles sont reliées respectivement les premiers moyens électriques solidaires du réseau de distribution et de guidage et les seconds moyens électriques solidaires de l'endoscope.

11. Système d'inspection de zones internes d'une machine selon la revendication 10, **caractérisé en ce que** les premiers moyens électriques internes (50) comportent :
- un ensemble de lignes électriques (51) fixées le long de la paroi interne de chaque gaine souple de guidage et reliées à une borne de connexion électrique (25) fixée au barillet (14), la borne de connexion électrique (25) étant reliée à la première borne d'entrée (54) du dispositif électrique de surveillance ;
- des premiers contacts électriques aménagés sur les lignes électriques au moins au niveau de chaque aiguillage.

12. Système d'inspection de zones internes d'une machine selon la revendication 10, **caractérisé en ce que** les seconds moyens électriques solidaires de l'endoscope comportent une ligne électrique (60) fixée le long de l'endoscope reliée par une première extrémité à un second contact électrique (61) fixé dans une région périphérique externe de la tête de l'endoscope (12) et reliée par une seconde extrémité à la seconde borne d'entrée (55) du dispositif électrique de surveillance (53).

13. Système d'inspection de zones internes d'une machine selon la revendications 10, **caractérisé en ce que** le dispositif électrique de surveillance (53) comporte :
- un panneau de visualisation (57) comportant une représentation graphique du réseau de distribution et de guidage,
- des témoins lumineux (56) disposés sur le panneau de visualisation et connectés entre les deux bornes d'entrée du dispositif électrique de surveillance par l'intermédiaire de circuits électriques montés dans le dispositif électrique de surveillance, l'emplacement des témoins lumineux sur la représentation graphique recopiant à l'identique l'emplacement correspondant des premiers contacts électriques dans le réseau de distribution et de guidage.

14. Système d'inspection de zones internes d'une machine selon l'une quelconque des revendications précédentes, **caractérisé en ce qu'**il comporte en outre des moyens de ventilation (70) pour refroidir l'endoscope et/ou le réseau de distribution et de guidage avant et/ou pendant l'inspection de parties chaudes de la machine.

## Patentansprüche

1. System zur endoskopischen Untersuchung innerer Bereiche einer Maschine, das aus einer Betrachtungsvorrichtung besteht, die mit einem faseroptischen Endoskop ausgestattet ist, das dazu vorgesehen ist, durch eine in einer Wand der Maschine ausgeführte Einlassöffnung eingeführt zu werden, sowie mit einer mit dem Endoskop verbundenen Lichtquelle ausgestattet ist,
**dadurch gekennzeichnet,**
**dass** es ferner ein Verteilungs- und Führungsnetz für das Endoskop aufweist, das dazu bestimmt ist, im Inneren der Maschine angebracht zu werden, und das umfasst:
- einen Zylinder (14), der dazu vorgesehen ist, in die Einlassöffnung in der Wand der Maschine eingeführt zu werden, wobei der Zylinder mindestens eine axiale Öffnung (23) aufweist, deren Durchmesser geeignet ist, das Endoskop durchzulassen,
- ein Netz (15) von Führungsschläuchen, das dazu bestimmt ist, im Inneren der Maschine zwischen der axialen Öffnung (23) des Zylinders und den vorbestimmten, zu kontrollierenden inneren Bereichen (16) befestigt zu werden, wobei jeder Führungsschlauch eine besondere Untersuchungsbahn bildet.

2. System zur Untersuchung innerer Bereiche einer Maschine nach Anspruch 1,
**dadurch gekennzeichnet,**
**dass** das Netz (15) von Führungsschläuchen mindestens einen ersten Führungsschlauch (17) enthält, der direkt an die axiale Öffnung (23) des Zylinders angeschlossen ist und geeignet ist, in einem vorbestimmten, zu kontrollierenden inneren Bereich (16) zu münden.

3. System zur Untersuchung innerer Bereiche einer Maschine nach Anspruch 2,
**dadurch gekennzeichnet,**
**dass** das Netz von Führungsschläuchen mindestens einen zusätzlichen Führungsschlauch (18) enthält, der als Umleitung von dem ersten Führungsschlauch (17) angeordnet ist und geeignet ist, in einem zusätzlichen zu kontrollierenden inneren Bereich zu münden.

4. System zur Untersuchung innerer Bereiche einer Maschine nach Anspruch 2,
**dadurch gekennzeichnet,**
**dass** das Netz (15) von Führungsschläuchen mehrere zusätzliche Führungsschläuche (18) enthält, die als Umleitung und / oder als Verzweigung von dem ersten Führungsschlauch (17) angeordnet sind.

5. System zur Untersuchung innerer Bereiche einer Maschine nach einem der Ansprüche 3 oder 4,
**dadurch gekennzeichnet,**
**dass** das Netz (15) von Führungsschläuchen Weichen (19) enthält, die im Bereich jeder Umleitung angebracht sind.

6. System zur Untersuchung innerer Bereiche einer Maschine nach einem der vorherigen Ansprüche,
**dadurch gekennzeichnet,**
**dass** an jedem Führungsschlauch an einem Ende, das in die zu prüfenden inneren Bereiche mündet, Rückschlagventile angebracht sind.

7. System zur Untersuchung innerer Bereiche einer Maschine nach Anspruch 1,
**dadurch gekennzeichnet,**
**dass** der Zylinder (14) mehrere axiale Öffnungen (23) aufweist, die einzeln mit Führungsschläuchen verbunden sind, die dazu bestimmt sind, im Inneren der Maschine befestigt zu werden, um mehrere mögliche Untersuchungsbahnen zu bilden.

8. System zur Untersuchung innerer Bereiche einer Maschine nach Anspruch 7,
**dadurch gekennzeichnet,**
**dass** der Zylinder (14) ferner einen drehbaren Verschluss (24) aufweist, der vor den axialen Öffnungen (23) angeordnet ist, wobei der drehbare Verschluss (24) eine einzige Bohrung (28) enthält, deren Durchmesser geeignet ist, das Endoskop durchzulassen, wobei die Bohrung (28) des Verschlusses (24) in Verbindung mit einer der axialen Öffnungen (23) gebracht werden kann, um eine vorbestimmte Untersuchungsbahn zu wählen und alle anderen Untersuchungsbahnen zu verschließen.

9. System zur Untersuchung innerer Bereiche einer Maschine nach Anspruch 1,
**dadurch gekennzeichnet,**
**dass** das Endoskop ein Betrachtungsende aufweist, das in einem drehbaren Endoskopkopf (12) befestigt ist, wobei das Drehen des Endoskopkopfs fernbedient gesteuert wird.

10. System zur Untersuchung innerer Bereiche einer Maschine nach einem der vorherigen Ansprüche,
**dadurch gekennzeichnet,**
**dass** es ferner ein elektrisches System zur Erkennung der augenblicklichen Position eines in das Verteilungs- und Führungsnetz eingeführten Endoskops enthält, wobei das elektrische Erkennungssystem aufweist:
- erste innere elektrische Mittel (50), die mit dem Verteilungs- und Führungsnetz fest verbunden sind,
- zweite elektrische Mittel, die mit dem Endoskop fest verbunden sind,
- eine elektrische Vorrichtung (53) zur Überwachung der Position des Endoskops, die eine erste und eine zweite Eingangsklemme (54, 55) aufweist, an die die ersten elektrischen Mittel, die mit dem Verteilungs- und Führungsnetz fest verbunden sind, bzw. die zweiten elektrischen Mittel, die mit dem Endoskop fest verbunden sind, angeschlossen sind.

11. System zur Untersuchung innerer Bereiche einer Maschine nach Anspruch 10,
**dadurch gekennzeichnet,**
**dass** die ersten inneren elektrischen Mittel (50) umfassen:
- einen Satz elektrischer Leitungen (51), die entlang der Innenwand jedes Führungsschlauchs befestigt sind und mit einer elektrischen Anschlussklemme (25) verbunden sind, welche an dem Zylinder (14) befestigt ist, wobei die elektrische Anschlussklemme (25) mit der ersten Eingangsklemme (54) der elektrischen Überwachungsvorrichtung verbunden ist;
- erste elektrische Kontakte, die an den elektrischen Leitungen zumindest im Bereich jeder Weiche ausgeführt sind.

12. System zur Untersuchung innerer Bereiche einer Maschine nach Anspruch 10,
**dadurch gekennzeichnet,**
**dass** die zweiten elektrischen Mittel, die mit dem Endoskop fest verbunden sind, aus einer elektrischen Leitung (60) bestehen, die entlang des Endoskops befestigt ist und mit einem ersten Ende mit einem zweiten elektrischen Kontakt (61) verbunden ist, der in einem Außenumfangsbereich des Endoskopkopfs (12) befestigt ist und an einem zweiten Ende mit der zweiten Eingangsklemme (55) der elektrischen Überwachungsvorrichtung (53) verbunden ist.

13. System zur Untersuchung innerer Bereiche einer Maschine nach Anspruch 10,
**dadurch gekennzeichnet,**
**dass** die elektrische Überwachungsvorrichtung (53) aufweist:
- ein Display (57) mit einer graphischen Darstellung des Verteilungs- und Führungsnetzes,
- Anzeigeleuchten (56), die auf dem Display angeordnet sind und mittels Stromkreisen, die in der elektrischen Überwachungsvorrichtung eingebaut sind, zwischen den beiden Eingangsklemmen der elektrischen Überwachungsvorrichtung geschaltet sind, wobei der Platz der Anzeigeleuchten in der graphischen Darstellung identisch dem Platz der ersten elektrischen Kontakte in dem Verteilungs- und Führungsnetz entspricht.

14. System zur Untersuchung innerer Bereiche einer Maschine nach einem der vorherigen Ansprüche,
**dadurch gekennzeichnet,**
**dass** es ferner Lüftungsmittel (70) aufweist, um das Endoskop und / oder das Verteilungs- und Führungsnetz vor und / oder während der Untersuchung heißer Teile der Maschine zu kühlen.

## Claims

1. System for inspecting internal zones of a machine, comprising an observation device equipped with a fibre-optic endoscope intended to be introduced through an inlet opening formed in a wall of the machine and with a light source connected to the endoscope, **characterized in that** it further comprises a network for distributing and guiding the endoscope which is intended to be mounted inside the machine, comprising:
- a barrel (14) intended to be mounted in the inlet opening formed in the wall of the machine, the barrel comprising at least one axial orifice (23) having a diameter suited to the passage of the endoscope,
- a network (15) of flexible guide sleeves which is intended to be fixed inside the machine between the axial orifice (23) of the barrel and predetermined internal zones (16) that are to be checked, each flexible guide sleeve defining a specific inspection path.

2. System for inspecting internal zones of a machine according to Claim 1, **characterized in that** the network (15) of flexible guide sleeves comprises at least one first flexible guide sleeve (17) connected directly to the axial orifice (23) of the barrel and able to open onto a predetermined internal zone (16) that is to be checked.

3. System for inspecting internal zones of a machine according to Claim 2, **characterized in that** the network of flexible guide sleeves comprises at least one additional flexible guide sleeve (18) mounted as a branch of the first flexible guide sleeve (17) and able to open onto an additional internal zone that is to be checked.

4. System for inspecting internal zones of a machine according to Claim 2, **characterized in that** the network (15) of flexible guide sleeves comprises several additional flexible guide sleeves (18) mounted as a branch and/or as a tree structure coming off the first flexible guide sleeve (17).

5. System for inspecting internal zones of a machine according to either one of Claims 3 and 4, **characterized in that** the network of flexible guide sleeves (15) comprises routing devices (19) mounted at each branch.

6. System for inspecting internal zones of a machine according to any one of the preceding claims, **characterized in that** nonreturn valves are mounted on each flexible guide sleeve at an end opening onto the internal zones that are to be checked.

7. System for inspecting internal zones of a machine according to Claim 1, **characterized in that** the barrel (14) comprises several axial orifices (23) connected individually to flexible guide sleeves intended to be fixed inside the machine to define several possible inspection paths.

8. System for inspecting internal zones of a machine according to Claim 7, **characterized in that** the barrel (14) further comprises a rotary shutter (24) placed in front of the axial orifices (23), the rotary shutter (24) having just one hole (28) of a diameter suited to the passage of the endoscope, the hole (28) of the shutter being able to be brought into register with any one of the axial orifices (23) so as to select a predetermined inspection path and shut off all the other inspection paths.

9. System for inspecting internal zones of a machine according to Claim 1, **characterized in that** the endoscope comprises an observation end fixed in an orientable endoscope head (12), the orientation of the endoscope head being controlled remotely.

10. System for inspecting internal zones of a machine according to any one of the preceding claims, **characterized in that** it further comprises an electric system for detecting the instantaneous position of an endoscope introduced into the distribution and guide network, the electric detection system comprising:
- first internal electric means (50) secured to the distribution and guide network,
- second electric means secured to the endoscope,
- an electrical device (53) for monitoring the position of the endoscope, comprising a first and a second input terminal (54, 55) to which terminals the first electric means secured to the distribution and guide network and the second electric means secured to the endoscope are respectively connected.

11. System for inspecting internal zones of a machine according to Claim 10, **characterized in that** the first internal electric means (50) comprise:
- a set of electric lines (51) fixed along the internal wall of each flexible guide sleeve and connected to an electric connection terminal (25) fixed to the barrel (14), the electric connection terminal (25) being connected to the first input terminal (54) of the electric monitoring device;
- first electric contacts formed on the electric lines at least at each routing device.

12. System for inspecting internal zones of a machine according to Claim 10, **characterized in that** the second electric means secured to the endoscope comprise an electric line (60) fixed along the endoscope and connected by a first end to a second electric contact (61) fixed in an external peripheral region of the head of the endoscope (12) and connected by a second end to the second input terminal (55) of the electric monitoring device (53).

13. System for inspecting internal zones of a machine according to Claim 10, **characterized in that** the electric monitoring device (53) comprises:
- a display panel (57) comprising a graphic depiction of the distribution and guide network,
- indicator lamps (56) arranged on the display panel and connected between the two input terminals of the electric monitoring device via electric circuits mounted in the electric monitoring device, the location of the indicator lamps on the graphical representation exactly mirroring the corresponding location of the first electric contacts in the distribution and guide network.

14. System for inspecting internal zones of a machine according to any one of the preceding claims, **characterized in that** it further comprises ventilation means (70) for cooling the endoscope and/or the distribution and guide network before and/or during the inspection of hot parts of the machine.
